# EUROPEAN PATENT APPLICATION

(11) **EP 2 671 477 A1**
(43) Date of publication of application: **11.12.2013**
(21) Application number: 12170857.2
(22) Date of filing: 05.06.2012
(51) Int. Cl.: A47J 31/06, A47J 31/54

(54) **Hot beverage preparation apparatus comprising leafless brew receptacle**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

The present invention relates to hot beverage preparation apparatus comprising the following: a main body; at least one heating element, which enables heating of the water contained within said water receptacle and positioned below said water receptacle; a pump, which provides the delivery of heated water; an electronic card, which controls the operation of said pump and heating element; and at least one brewer into which tea, coffee or otherwise herbal ingredients is placed by the user. The present invention comprises at least one leafless brew receptacle into which beverage brewed inside said brewer is transferred and a valve plunger provided in the lower body of said brewer for enabling the flow of the beverage contained inside said brewer into said leafless brew receptacle.

## Description

### Technical Field of the Invention

The present invention relates to an electric hot beverage preparation apparatus for preparation of hot beverages, more specifically, it relates to providing the addition of hot water over the tea/coffee or herbal ingredients placed in the brewer by means of a pumping system and serving the beverage brewed after the addition of hot water from another independent receptacle.

### Background of the Invention

As is known, electric tea machines comprising a water receptacle and a brew receptacle are widely used. Water in a conventional receptacle is heated by means of heating elements and brewing is carried out in a separate receptacle by means of introducing said water to the dry tea leaves or beverages with different aromas.

In the prior art, electric beverage preparation machines generally comprise a receptacle where water is heated and a brewer provided separately from said receptacle, having optionally tea/coffee or otherwise herbal ingredients placed therein. Conventional tea/coffee machines where the user manually introduces boiling water to the brew receptacle as well as apparatus where the water is introduced to the brewer by means of a pump without the intervention of the user are available.

Electric hot beverage preparation machines comprise a variety of brewing receptacle structures. Tea/coffee or otherwise herbal ingredients provided in said brewers continue to brew until it is consumed and the beverage becomes more condensed. As the liquid content within the brewer decreases, available dry tea leaves and other possible herbal ingredients are filtered more into the served beverage over time and their taste turn into a bitter one due to the effect of hot water. Moreover, dry tea leaves and undesired residues pass into the served beverage.

In the prior art, hot beverage preparation devices comprising a plurality of brewers are already available. For example, in the utility model document TR 2007/05875**,** a samovar type hot beverage preparation apparatus provides a variety of hot beverages to many people at the same time depending on the preference of the user thanks to the at least two brewers provided therein. In said document, however, serving the brewed beverage from a separate receptacle is not suggested, thus, it does not offer any solution for removing the leaves contained within the current beverage, which is over brewed with the decreasing amount in due course. Again, hot beverage preparation apparatus comprising a plurality of brewers is disclosed in the U.S. Patent 5245914. In the improvement according to said patent, multiple brewer structure is described, however, no solution is provided for over brewing of the tea and similar hot beverage brewed in a receptacle and for removing the leaves therefrom.

The present invention provides an apparatus for solving the existing problems cited above in the hot beverage preparation machines, wherein dry tea leaves and leaves of the other herbal beverages placed in the brewing receptacle of the apparatus such as automatic tea/coffee machines used for preparing hot beverage by brewing method are removed from the served beverage and beverage that is clear, hot and tasting the same with decreasing beverage amount is served to the user. Said technical problems are solved by claim 1 describing the transfer of the liquid contained in the brewer separate from the brewing receptacle to a leafless brew receptacle.

### Objects of the Invention

One of the objectives of the present invention is to provide a hot beverage preparation apparatus comprising a leafless brew receptacle, which provides hot beverage that is better and more comfortable to drink by preventing the passage of dry tea leaves and leaves contained in other herbal beverages and possible residues into the cup or similar structure, in which the user serves said beverage, by means of a valve system provided therein.

Another object of the present invention is to provide a hot beverage preparation apparatus comprising a leafless brew receptacle, which allows the taste to remain the same by transferring the beverage contained within the brewer to another receptacle for preventing over brewing due to decreasing of the liquid amount within the receptacle where the beverage is brewed.

Another object of the present invention is to provide a hot beverage preparation apparatus comprising a leafless brew receptacle, which is practical in terms of safety, by way of utilizing an electric heater system for heating the water and bringing it to the desired temperature.

Another object of the present invention is to provide a hot beverage preparation apparatus comprising a leafless brew receptacle, which allows clean and safe transfer of the heated water to the brewer by means of a pumping system without the necessity for manual intervention.

Another object of the present invention is to provide a hot beverage preparation apparatus comprising a leafless brew receptacle, which prepares the tea instantaneously or at a later time frame without the necessity for manual intervention after the water receptacle is filled with water and the brewer is filled with desired beverage.

### Brief Description of the Figures

The brewer configurations according to the present invention are shown in the accompanying figures for a better understanding thereof, wherein said figures should not be used for interpretation of the claims without taking the description into account and should not be construed in a restricting sense, where:
Figure 1 is a perspective view of the hot beverage preparation apparatus according to the present invention comprising a leafless brew receptacle.

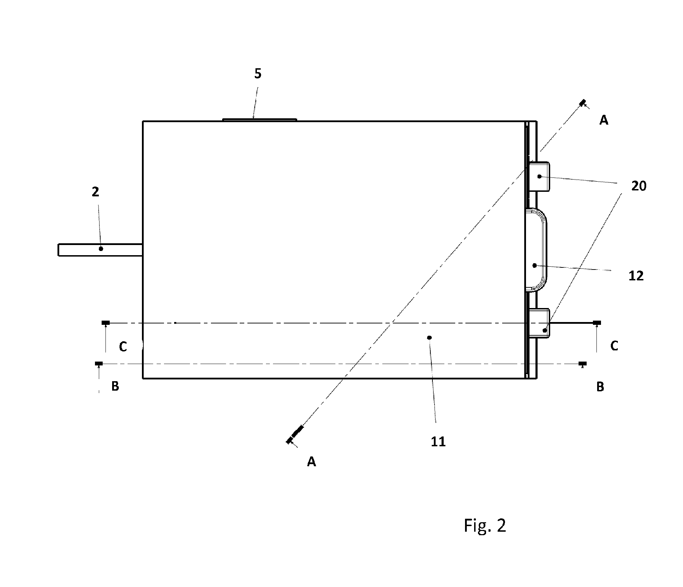

Figure 2 is a top view of the hot beverage preparation apparatus according to the present invention comprising a leafless brew receptacle.
Figure 3 is a B-B cross-sectional view of the automatic beverage preparation apparatus comprising a leafless brew receptacle shown in Figure 2.
Figure 4 is a perspective view of the automatic beverage preparation apparatus according to the present invention comprising a leafless brew receptacle with the main body cover being removed.
Figure 5 is an A-A cross-sectional view of the automatic beverage preparation apparatus comprising leafless brew receptacle shown in Figure 2.
Figure 6 is a C-C cross-sectional view of the automatic beverage preparation apparatus comprising a leafless brew receptacle shown in Figure 2.

### Detailed Description of the Invention

Numerals of the components illustrated in the figures, brief descriptions of which are given above, and referenced in the description are given below for the convenience of the reader.
1- Bottom Cover
2- Power Cord
3- Pump
4- Pump Suction Pipe
5- Heating Element Gasket
6- NTC Gasket
7- NTC
8- Heating Element
9- Main Body
10-Water Boiling Receptacle (Kettle)
11-Main Body Cover
12- Brewer
13-Valve Plunger
14-Valve Gasket
15-Valve Body
16- Brewer Platform Cover
17-Leafless Brew Receptacle
18-Faucet O-ring
19- Faucet Body Cover
20- Faucet Button
21- Faucet Plunger
22- Faucet Body
23- Faucet Spring
24- Hot Water Faucet Pipe
25- Electronic Card
26- Pump Delivery Pipe
27- Drip Tray
28- Leafless Receptacle Cover
29-Valve O-ring
30-Valve Spring
31- Brewer Hot Water Inlet Pipe
32- Faucet Platform Cover
33- Micro Switch
34- Magnetic Coil
35-Valve Opening Lever
36-Valve Opening Lever Link
37- Micro Switch Button
38- Safety Thermostat
39- Brewer and Kettle Contact Surface
40- Heating Element Clamp

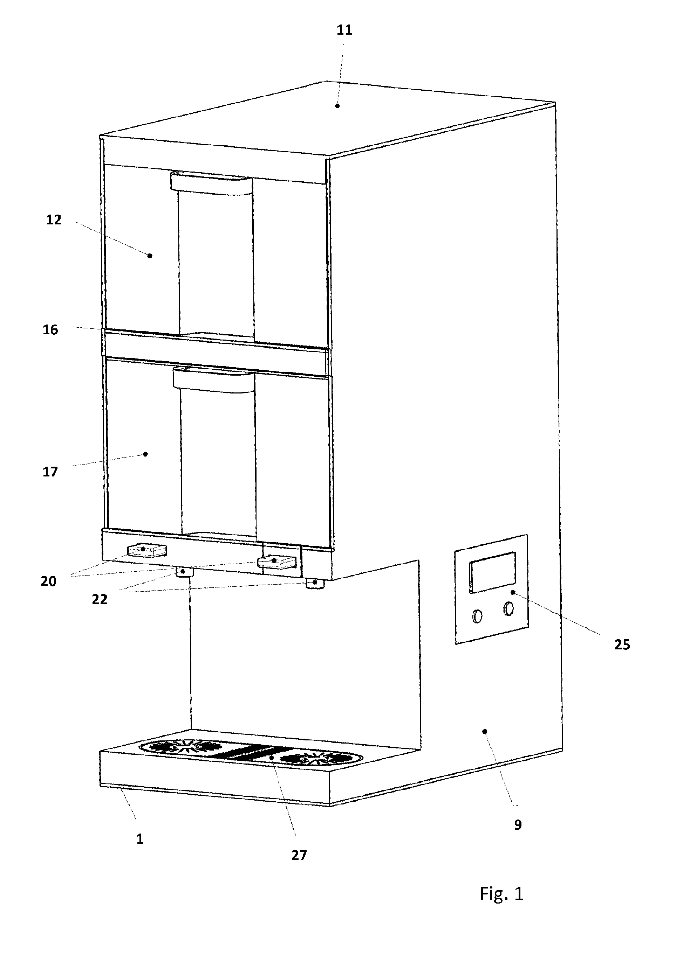

Figure 1 illustrates the perspective view of a representational application of the automatic beverage preparation apparatus comprising different brew receptacles (12, 17). The present invention, as shown in Figure 1, generally comprises a main body (9), a bottom cover (1) over which the main body (9) is provided, a main body cover (11) so as to cover the top part of the main body (9), a brewer (12), a brewer platform cover (16) over which said brewer (12) is provided, a separate leafless brew receptacle (17) provided immediately below said cover, to which filtered tea from said brewer (12) is transferred, faucet buttons (20) and faucet body (22) protruding outwardly from the main body (9) and providing serving of both the hot water and the beverage brewed within the beverage receptacle (17).

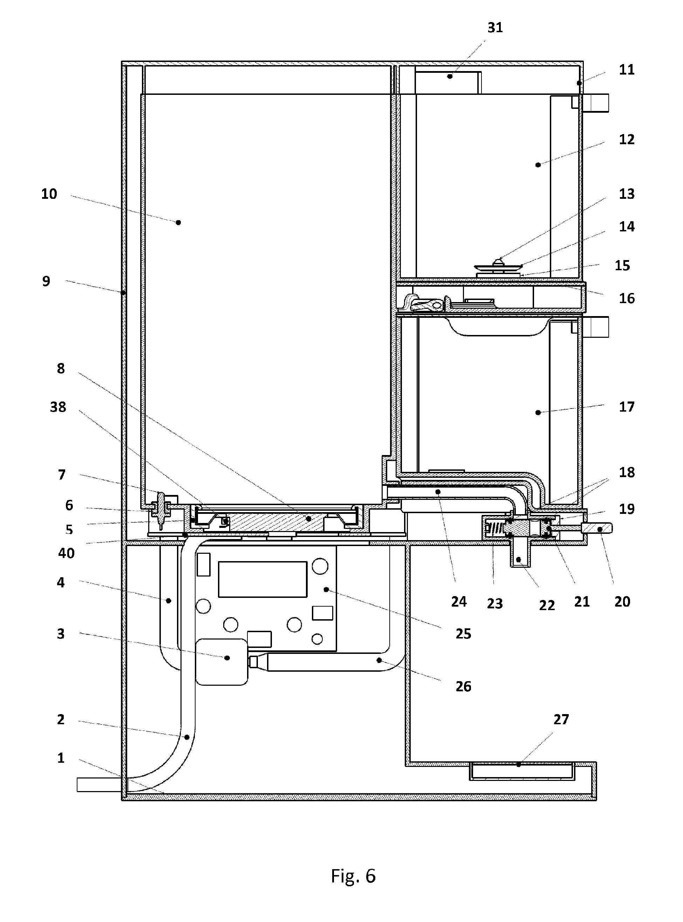

Automatic hot beverage preparation apparatus according to the present invention with said leafless brew receptacle (17) may be set to operate instantaneously or at a desired time frame by means of an electronic card (25) provided therein. A water boiling receptacle (10) extending perpendicularly to the placement surface of the present invention and where the water is stored is provided within the main body (9). Said brewer (12) and said brew receptacle (17) positioned one under the other are provided on the front surface of the water boiling receptacle (10) so as to be in contact with said water receptacle (10). As can be seen in the cross-sectional view given in Figure 6, heating element (8), which converts electrical energy delivered to the system by the power cord (2) through the junction area of the main body (9) and the bottom cover (1) into heat energy is provided. Said heating element (8) is positioned horizontally with respect to the surface in the lower body of the water receptacle.

The user fills the water receptacle (10) with water up to the desired level to be served. Main body cover (11) provided over the main body (9) is lifted up and tea or preferred herbal leaves is placed into the brewer (12), then, said main body cover (11) is closed and brought in to the position shown in Figure 1.

After filling the water receptacle (10) with desired amount of water and placing the tea leaves preferred by the user into the brewer (12), water amount to be transferred from the water receptacle (10) to the brewer (12) and brewing duration during which the water will be kept in the brewer (12) are selected by means of the electronic card (25) provided on the lateral surface of the main body (9), as shown in Figure 1.

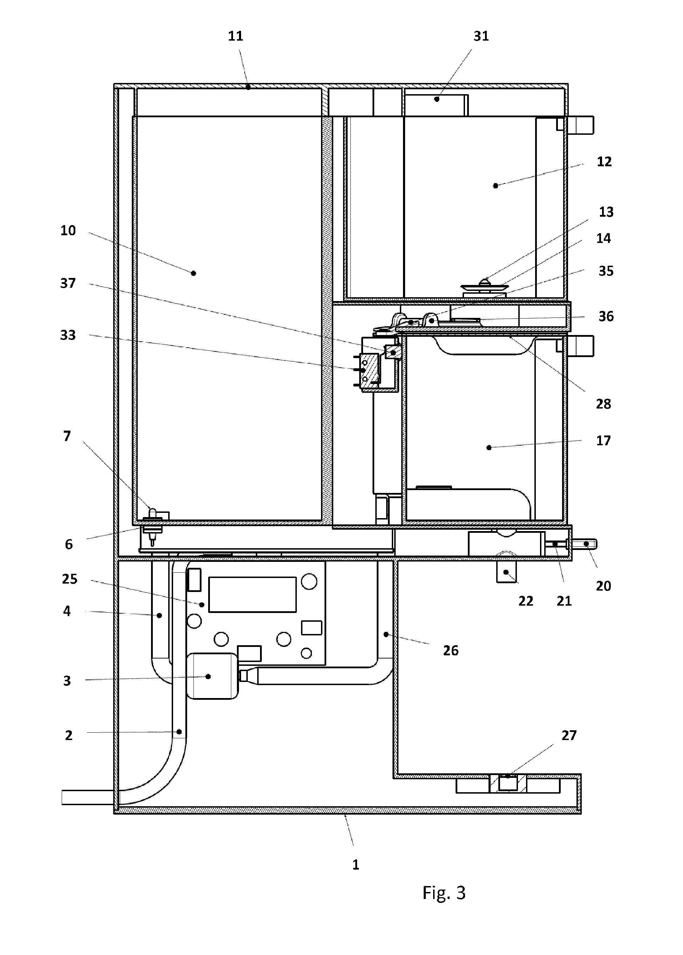

Leafless brew receptacle (17) according to the present invention is preferably positioned below the brewer (12). Beverage prepared in the brewer (12) is transferred to the leafless tea receptacle (17) provided thereunder. Operation of the system can be controlled by means of a micro switch (33) according to the invention through detection of the positioning of said leafless tea receptacle (17). Said micro switch (33) in electrical communication with said electronic card (25) prevents the operation of the system as a security precaution when said leafless tea receptacle (17) is not correctly positioned. As can be seen in Figure 3, said micro switch (33) is connected with a micro switch button (37). Said micro switch structure (33) conventionally comprises a return spring contact. Said contact returns to the initial state when the force applied to the micro switch button (33) by the leafless tea receptacle (17) is removed.

As can be seen in Figure 6, said heating element (8) is sealed by way of being surrounded by a gasket (5); moreover, it is engaged by a heating element clamp (40) to be kept fixedly. Boiling temperature of the water heated by means of the heating element (8) located below the water receptacle (10) is detected by means of an NTC sensor (7). The NTC sensor (7) used herein is a negative temperature coefficient thermistor element, wherein resistance of the sensor (7) decreases as the temperature increases. The NTC sensor (7) detecting the boiling of water is surrounded by the NTC gasket (6) below the water receptacle (10) for preventing leakage and mounted so as to be kept fixedly. Temperature values detected by means of the NTC sensor (7) are sent to the electronic card (25) and said electronic card (25) enables keeping temperature of the water within the water receptacle (10) at low values by decreasing the current power of the heating element (8).

In the present invention, a safety thermostat (38) functions to disconnect the apparatus from the mains power upon detection of excess heat generated by the heating element (8) when water within the water receptacle (10) runs out for any reason; thus, preventing the damage to the surrounding area and to the device by enabling termination of the heating process.

Upon detection of boiling by means of the NTC sensor (7), water amount determined in accordance with the preset water amount on the electronic card (25) is transferred by means of a pump (3) provided in the main body (9). Water contained within the water receptacle (10) and reached to the desired calorific value is transferred to the brewer (12) by means of said pump (3). Pumps (3) used in the present invention provides kinetic or potential energy to the fluid drawn thereinto and they can be operating by way of both piston and centrifugal force methods.

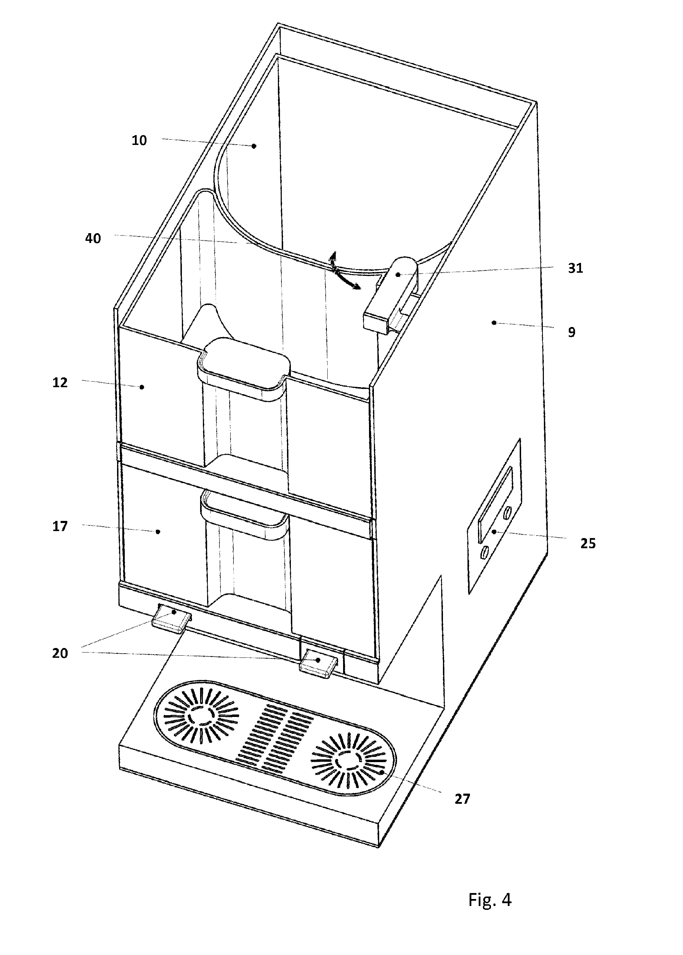

Said brewer (12) and said leafless brew receptacle (17) positioned one below the other are made of heat resistant metal or suitable plastic. In Figure 3, a cross-sectional view of the embodiment according to the invention is given with the pump (3) providing the transfer of water and the auxiliary elements (4, 26) thereof. The pump (3) is connected with a pump suction pipe (4) and pump delivery pipe (26). Typically, pressure is applied on the fluid by means of the pressure created by the plunger provided within the pump and pumping is obtained. As is known, delivery operation is performed through increasing and decreasing of the volume vacated by the plunger of the pump (3). In this way, heated water is drawn through the pump suction pipe (5) with the suction created by the pump (3), then, it is directed into a brewer hot water inlet pipe (31) firstly through a first line extending horizontally with respect to the positioning plane of the pump and then by said pump delivery pipe (26) extending upwardly in the vertical direction as an elbow. Said brewer hot water inlet pipe (31) shown in Figure 4 is positioned so as to pivot around its own axis and allows brewer structure (12) to be taken out for cleaning purposes when desired.

Brewing of the beverage is obtained within the determined time period by transferring the hot water from the water receptacle (10) to the brewer (12) by means of the pump (3). Brewing process is carried out in the upper brewer of the separate brewers (12, 17) positioned one above the other after the transfer of the hot water to the brewer (12) into which tea leaves are placed. Leaves contained in the tea, coffee or other herbal hot beverages prepared in the first brewer according to the invention are removed and transferred to the leafless tea receptacle (17) provided in the bottom part. In this way, brewing for more than the desired duration is prevented and leaves contained in the brewed beverage prepared in the first receptacle (12) are removed and the beverage is transferred to a separate receptacle to be drunk comfortably and without change of taste. Consequently, gradual condensing and over brewing of the beverage is prevented during the period till full consumption of the preferred hot beverage.

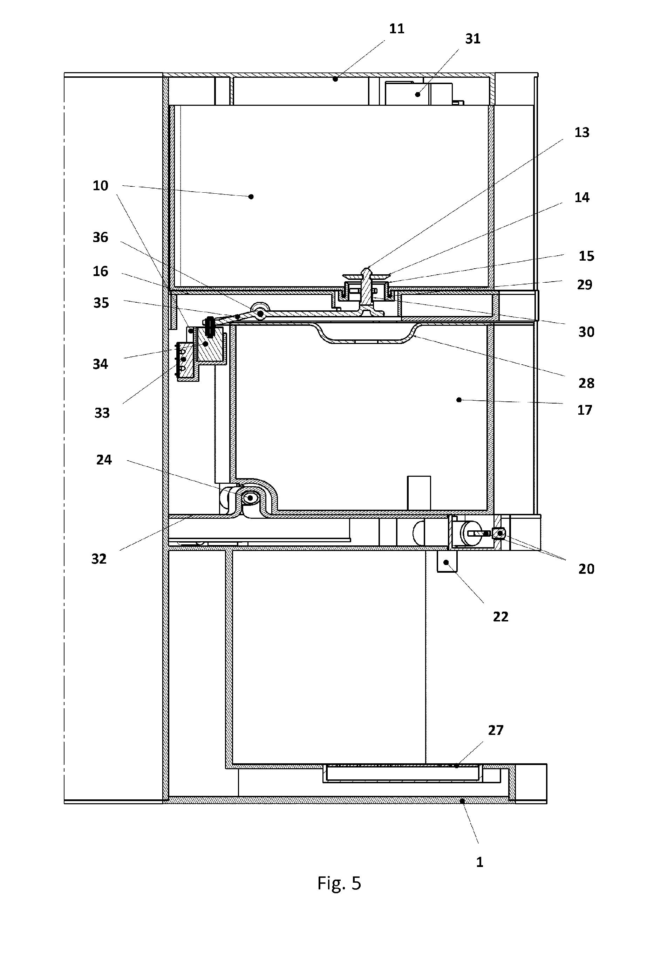

Brewing duration of the first brewer (12) can be set using the electronic card (25). As can be seen in Figure 5, a magnetic coil (34), which functions at the end of desired brewing duration, is provided below the first brewer (12). A magnetic piston is energized at the end of the duration set through the electronic card (25) and it moves a valve opening lever (35). Said valve opening lever (35) drives a valve plunger (13) by means of a valve opening lever link (36) connected thereto. Thus, a valve body (15) sealed with a gasket (14) is moved vertically with respect to the main body (9) and transfer of the hot beverage brewed during desired duration to the lower receptacle (17) is carried out.

Brewed beverage, which is transferred free of leaves to the lower receptacle (17) from the upper receptacle (12) where brewing with hot water takes place, maintains its thermal energy due to being in contact with the water receptacle (10). Serving of the brewed beverage transferred to the lower receptacle (17) is shown in Figure 6. A plurality of faucet buttons (20) protruding outwardly from the main body (9) surface is provided. Said faucet buttons (20) connected with a faucet plunger (21) compress a faucet spring (23) with the driving force created by the user. Thus, transfer of the liquid from the upper receptacle to the serving cup or similar structure through the faucet bodies (22) is obtained. As can be seen in Figure 1, faucet buttons (20) one of which is preferably connected to the lower body (17) and the other of which is connected to the water receptacle (10), carry out serving of the water contained in the water receptacle or the brewed hot beverage contained in the lower receptacle depending on the preference of the user. Said faucet bodies (22) are circularly surrounded by O-rings (18) enabling water tightness and vibration damping. In addition, each faucet body (22) comprises a faucet body cover (19) provided in the upper part. Furthermore, as can be seen in Figure 4, a drip tray (27) is provided to prevent spilling of water around in a possible water overflow or spill.

Water receptacle (10) and brewers (12, 17) according to the present invention are preferably produced from heat resistant materials such as metal, plastic, glass or porcelain.

## Claims

1. Electrical hot beverage preparation apparatus comprising a water receptacle (10), at least one heating element (8), which enables heating of the water contained within said water receptacle (10) and which is positioned below said water receptacle (10), a pump (3), which provides the delivery of heated water contained in said water receptacle (10), an electronic card (25), which controls the operation of said pump (3) and said heating element (8), and at least one brewer (12) into which water infusible drinkable ingredients are placed, **characterized in that** said electrical hot beverage apparatus further comprises;
at least one leafless brew receptacle (17) provided within said brewer (12) for receiving brewed beverage and
a valve plunger (13) provided in the lower body of said brewer (12) for selectively enabling flow of the beverage contained within said brewer (12) to said leafless brew receptacle (17).

2. A hot beverage preparation apparatus according to Claim 1, wherein it comprises at least one microswitch button (37), connected to at least one microswitch (33), for controlling the operation of the system by detection of the pressure applied by said leafless tea receptacle (17) to the button (37).

3. A hot beverage preparation apparatus according to Claim 1, wherein it comprises a valve system (13, 35, 36, 13, 14, 15) preventing the passage of leaves and residues contained in herbal ingredients provided in said brewer (12) into said leafless brew receptacle (17).

4. A hot beverage preparation apparatus according to Claim 1, wherein it comprises a thermistor (7) positioned on the bottom surface of said water receptacle (10) and detecting the temperature of heated water.

5. A hot beverage preparation apparatus according to Claim 4, wherein said thermistor is an NTC sensor (7) and surrounded by a sealing element (6).

6. A hot beverage preparation apparatus according to Claim 1 or 5, wherein it comprises a magnetic coil (34) driving said valve plunger (13).

7. A hot beverage preparation apparatus according to claim 1 or 6, wherein it comprises a safety thermostat (38) for preventing the damage resulting from overheating of the heating elements (8) when water within said water receptacle (10) runs out.

8. A hot beverage preparation apparatus according to any preceding Claims, wherein said water receptacle (10), brewer (12) and leafless brew receptacle (17) are made of material selected from the group consisting of heat resistant metal, glass, porcelain, plastic or composite materials.

9. A hot beverage preparation apparatus according to claim 1 or 8, wherein a pump suction pipe (4) extending into the water receptacle (10) is connected to a pump delivery pipe (26) to which sucked liquid from water receptacle (10) is transferred.

10. A hot beverage preparation apparatus according to claim 9, wherein it comprises a brewer hot water inlet pipe (31) transferring the liquid coming from the pump delivery pipe (26) to the brewer (12) by means of an elbow structure that can rotate around its own axis.

11. A hot beverage preparation apparatus according to any preceding Claims, wherein it comprises a drip tray (27) with groove structure for holding the overflowing/spilling or dripping liquid from the serving cup or similar structure to be filled with prepared beverage.

12. A hot beverage preparation apparatus according to any preceding Claims, wherein said brewer (12) structure is removable and attachable for cleaning or other purposes.

13. A hot beverage preparation apparatus according to claim 11 or 12, wherein said magnetic coil (34) is connected to a valve opening lever (35) to which motion is transmitted thereby and said valve opening lever (35) is connected to at least one valve opening lever link (36).

14. A hot beverage preparation apparatus according to claim 1 or 13, wherein said brewer (12) and leafless brew receptacle (17) are in contact with said water receptacle (10) for heat preservation purposes.
